# EUROPÄISCHE PATENTSCHRIFT

(11) **EP 1 157 221 B1**
(45) Veröffentlichungstag und Bekanntmachung des Hinweises auf die Patenterteilung: **11.02.2004**
(21) Anmeldenummer: 00983186.8
(22) Anmeldetag: 29.11.2000
(51) Int. Cl.: F16F 13/26

(54) **ELASTISCHES LAGER MIT HYDRAULISCHER DÄMPFUNG**
ELASTIC BEARING WITH HYDRAULIC DAMPING PROPERTIES
PALIER ELASTIQUE A AMORTISSEMENT HYDRAULIQUE

(30) Priorität: 02.12.1999 DE 19958011
(43) Veröffentlichungstag der Anmeldung: 28.11.2001
(73) Patentinhaber: WOCO AVS GmbH, 63628 Bad Soden-Salmünster (DE)
(72) Erfinder: HERMANN, Waldemar, 63637 Lettgenbrunn (DE); GRÜNIG, Volker, 04600 Altenburg (DE)
(74) Vertreter: Weber-Bruls, Dorothée, Dr.
(86) Internationale Anmeldenummer: PCT/EP2000/011952
(87) Internationale Veröffentlichungsnummer: WO 2001/040675

(56) Entgegenhaltungen:
- EP-A- 0 115 417
- US-A- 5 167 403
- US-A- 5 217 211
- US-A- 5 314 173
- PATENT ABSTRACTS OF JAPAN vol. 1999, no. 09, 30. Juli 1999 (1999-07-30) & JP 11 101297 A (TOKAI RUBBER IND LTD), 13. April 1999 (1999-04-13)
- PATENT ABSTRACTS OF JAPAN vol. 1999, no. 08, 30. Juni 1999 (1999-06-30) & JP 11 082611 A (TOKAI RUBBER IND LTD), 26. März 1999 (1999-03-26)
- PATENT ABSTRACTS OF JAPAN vol. 1998, no. 14, 31. Dezember 1998 (1998-12-31) & JP 10 238587 A (TOYODA GOSEI CO LTD), 8. September 1998 (1998-09-08)

## Beschreibung

Die Erfindung betrifft ein elastisches Lager mit hydraulischer Dämpfung der im Obergriff des Patentanspruchs 1 genannten Art (siehe US-A-5 167 403).

Hydrolager mit einer Lose zum Entkoppeln von Schwingungen mit kleinen Amplituden und meist hohen Frequenzen sind in großer Anzahl und den verschiedensten Ausgestaltungen aus dem landläufigen Stand der Technik bekannt. Eine Lose in solchen Lagern kann entweder eine tatsächlich lose in einem Käfig liegende Scheibe oder Ringscheibe oder auch andersartig konfiguriertes scheibenförmiges Material sein, das in einer diese Lose mit Spiel umfassenden Sicherung, einem sogenannten Käfig, frei schwingfähig, insbesondere axial zu seinen Hauptoberflächen schwingfähig, gefangen ist. Statt des tatsächlich unbefestigt, also "lose" in den Käfig eingelegten Metallteils oder Gummiteils, sind in den hier in Rede stehenden Hydrolagern aber auch dünne, auch teilverstärkte, schwingfähige Elastomermembranen eingesetzt worden, zumeist jedoch ebenfalls in Käfigen der beschriebenen Art, um die Schwingungen solcher Entkopplungsmembranen tatsächlich auf Wege zu beschränken, die den zu entkoppelnden Schwingungen mit kleinen Amplituden und deren Weglängen entsprechen. Im Rahmen der vorliegenden Beschreibung umfasst der hier verwendete Terminus "Lose" dementsprechend neben den tatsächlich unbefestigt in den wegbegrenzenden Käfigen gefangenen Entkopplungselementen die Entkopplungsmembranen der vorstehend erläuterten Art.

Ebenfalls aus dem landläufigen Stand der Technik sind zahllose Mittel bekannt, den Anwendungsbereich sowohl entkoppelnder als auch nicht entkoppelnder Hydrolager sowie den Komfort solcher Hydrolager in der Kraftfahrzeugtechnik dadurch zu erweitern und zu verbessern, dass deren Federkenndaten durch Einwirken auf die Dämpfungsflüssigkeit verändert werden. Bei diesen Mitteln handelt es sich überwiegend um Vorrichtungen, die mit rheologischen, hydraulischen, konfigurativschwingungstechnischen, mechanischen oder auch pneumatischen Stellkräften und Kompensationskräften auf die Dämpfungsflüssigkeit eines Hydrolagers einwirken.

In diesem Rahmen sind seit längerem auch Vorschläge bekannt, die Kenndatenfelder von Hydrolagern während des Einsatzes der Lager, also während schwingender Beaufschlagung der Hydrolager, die in das Lager eingeleiteten Störschwingungen durch pneumatische Kompensationseinwirkungen effektiver zu dämpfen oder zu tilgen. Dies ist in den letzten Jahren und Jahrzehnten durchgängig in der Weise erfolgt, dass auf die die Ausgleichskammer begrenzende Ausgleichsmembran, die üblicherweise das Dämpfungsverhalten und die Federkenndaten eines Hydrolagers nicht, oder zumindest nicht relevant, beeinflussen sollte, auf ihrer Aussenseite in der Weise pneumatisch eingewirkt wird, dass die Ausgleichsmembran entgegen ihrer ursprünglichen Bestimmung als Feder zu einer Lagerkomponente umfunktioniert wird, die das Kennlinienfeld des Hydrolagers signifikant verändert, die Federkennlinien also beispielsweise beim Auftreten von Störschwingungen mit großen Amplituden versteift und bei Einwirkung von Störschwingungen mit kleineren Amplituden die Federkennlinien flacher verlaufend konfiguriert. Dieses pneumatische Einwirken kann dabei sowohl unter Überdruck erfolgen, wie beispielsweise aus der DE 32 10 731 A1 bekannt, kann aber auch in Form einer Unterdruckregelung ausgelegt sein, wie dies beispielsweise aus der europäischen Offenlegungsschrift EP 851 146 A1 bekannt ist.

Pneumatisch regelbare Hydrolager dieser Art sind jedoch selbst ohne Ansehen ihrer Funktionstauglichkeit reine Luxusartikel. Sie erfordern aufwendige Ist-Zeit-Regelwerke und zum Aufbringen der erforderlichen Kräfte auf die Ausgleichsmembran mit ihrer relativ großen Fläche pneumatische Druckerzeuger, Puffertanks und Schaltwerke von solchen Abmessungen, die ausserhalb der zu steuernden Hydrolager selbst bereitgestellt werden müssen, da sie in den begrenzten Bauraum dieser Lager nicht mehr integrierbar sind.

Die Erfindung geht vom Stand der Technik gemäß US-A-5 167 403 aus: Das pneumatische Schalten eines im Prinzip klassisch aufgebauten Hydrolagers wird nicht durch Angriff an der Ausgleichsmembran, sondern durch einen Angriff an dem Entkopplungselement bewirkt, speziell an einer Entkopplungsmembran, einer Lose. Dies ermöglicht bereits von vornherein eine Reduzierung und Minimierung des erforderlichen pneumatischen Aufwandes, vor allem auch im Hinblick auf die erforderliche Baugröße der pneumatischen Bauelemente.

Es liegt das technische Problem zugrunde, ein Hydrolager, insbesondere Aggregatlager für die Kraftfahrzeugtechnik, zu schaffen, das mit geringem Pneumatikaufwand hinsichtlich Baugröße, Kosten und Leistung praktisch nutzbar und effektiv in seinem Federkennlinienfeld beeinflusst werden kann.

Dieses technische Problem löst die Erfindung durch ein elastisches Lager, das die im Patentanspruch 1 genannten Merkmale aufweist.

Im Rahmen der Erfindung wird bewusst auf eine Kompensationsregelung verzichtet und statt dessen mit wiederum sehr viel einfacheren Mitteln in durchaus pragmatischer Weise statt der Regelung ein einstellbares Setzen von drei verschiedenen Betriebszuständen des Lagers eingerichtet, die die Dämpferfunktion des Hydrolagers auf weiche, mittelharte und harte Dämpfung einstellen. Dabei reicht es in aller Regel vollständig aus, wenn die drei verfügbaren Dämpfungszustände vom Fahrer eines Kraftfahrzeugs an der Konsole vorgewählt werden. Bei ohnehin vorhandener Fahrzeugsensorik lassen sich diese drei pneumatisch schaltbaren Zustände des Hydrolagers der Erfindung jedoch ohne weiteres auch aus der zentralen elektronischen Kraftfahrzeugsteuerung abgreifen. Dabei ermöglicht die Einstellung dieser drei Dämpfungszustände mittels des Schaltmediums Luft Zustände mit einer Eigenbandbreite und Dynamik zur Verfügung zu stellen, die eine Ist-Zeit-Kompensation mit ihrer aufwendigen Regeltechnik bereits vom Konzept her überflüssig werden lassen.

Weitere Ausgestaltungen der Erfindung sind Gegenstand der

Unteransprüche.

Die Erfindung ist im folgenden anhand von Ausführungsbeispielen in Verbindung mit den Zeichnungen näher erläutert. Es zeigen:
- Fig. 1:: im Axialschnitt ein erstes Ausführungsbeispiel eines Hydrolagers mit den Merkmalen der Erfindung;
- Fig. 2:: ein zweites Ausführungsbeispiel eines Hydrolagers mit den Markmalen der Erfindung; und
- Fig. 3:: als Blockschaltbild die Elemente der pneumatischen Hydrolagerschaltung gemäß der Erfindung.

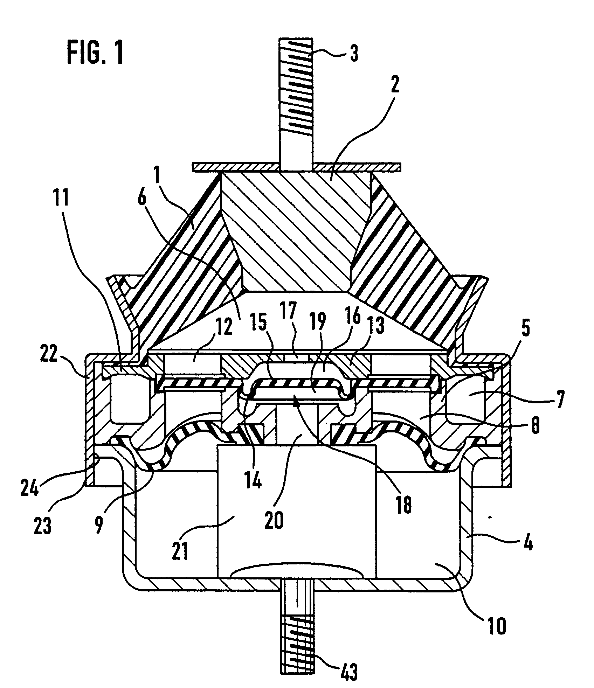

Ein erstes Ausführungsbeispiel des Hydrolagers gemäß der Erfindung ist im Axialschnitt in der Figur 1 gezeigt. Das dargestellte Aggregatlager für ein Kraftfahrzeug besteht im wesentlichen aus einer konisch ringförmigen Tragfeder 1, die ein Auflageranschlussstück 2 mit einem Anschlussgewindebolzen 3 für das Aggregat trägt. Die Tragfeder 1 ist mittelbar auf einem becherförmig ausgebildeten Widerlageranschlussstück 4 abgestützt. Zwischen der Abstützung auf dem Widerlageranschlussstück 4 und dem widerlagerseitigen Rand der Tragfeder 1 ist eine übliche Trennscheibe 5 eingefügt. Zwischen der Trennscheibe 5 und der Tragfeder 1 ist eine mit hydraulischem Dämpfungsfluid gefüllte hydraulische Arbeitskammer 6 definiert. Diese Arbeitskammer 6 ist in üblicherweise über einen Drosselkanal 7, der Bestandteil der Trennscheibe ist, mit einer Ausgleichskammer 8 verbunden, die zwischen der widerlagerseitigen Oberfläche der Trennscheibe 5 und einer elastischen und praktisch widerstandsfrei verformbaren Ausgleichsmembran 9 druckfest und fluiddicht ausgebildet ist. Bei einer Druckverformung der Tragfeder 1 wird das hydraulische Dämpfungsfluid aus der Arbeitskammer 6 durch den Drosselkanal 7 hindurch in die Ausgleichskammer 8 gepumpt, wobei sich die Ausgleichsmembran 9 ohne Widerstand frei in einen Leerraum 10 hinein verformen kann, der in dem becherartig ausgebildeten Widerlageranschlussstück 4 vorgesehen ist.

Zwischen dem widerlagerseitigen Rand der Tragfeder 1 und der auflagerseitigen Oberfläche der Trennscheibe 5 ist ein ringförmiger Käfig 11 fest eingespannt. Dieser Käfig besteht im wesentlichen aus einem peripheren Ringteil, mit dessen Hilfe der Käfig eingespannt ist, und an dem sternförmig verlaufend Stege 12 ausgebildet sind, die einen zentralen ringförmigen und domartig konfigurierten Abschnitt, den eigentlichen Losekäfig 13, tragen. Mit seinem widerlagerseitig geschlossen umlaufenden Rand ist der Losekäfig mechanisch fest, druckfest und fluiddicht auf den Außenrand einer Rollfalte 14 gespannt, so dass zwischen einer im Zentrum der Rollfalte getragenen Elastomerlose 15 und dem Losekäfig 13 eine Entkopplungskammer 16 ausgebildet ist, die über Durchbrechungen 17 mit dem Dämpfungsfluid in der Arbeitskammer 6 hydraulisch frei kommuniziert. Dabei sind die Lose und die ringförmige Rollfalte in einer zentralen Ausnehmung 18 angeordnet, die in der Trennscheibe 5 vorgesehen ist.

In der aus Figur 1 entnehmbaren Weise sind die domförmig konfigurierte widerlagerseitige Oberfläche des Losekäfigs 13 und die dieser gegenüberliegenden auflagerseitigen Oberfläche der Lose 15 in der Weise flächenkomplementär zueinander dimensioniert und konfiguriert, dass bei einem Anheben und Eindrücken der Lose 15 in und an den Dom des Losekäfigs 13 die Durchbrüche 17, die die Entkopplungskammer 16 mit dem Dämpfungsfluid in der Arbeitskammer 6 verbinden, fluiddicht und druckfest verschliessbar sind.

Die zentrale Ausnehmung 18 in der Trennscheibe 5 ist weiterhin dergestalt napfartig konfiguriert, dass zwischen der widerlagerseitigen Unterseite der Lose 15 und der Rollfalte 14 eine Steuerkammer 19 definiert ist, in die hinein und aus der axial hinaus die Lose über ihre Rollfalte axial beweglich ist, sei dies schwingend unter dem Einfluss der über das Dämpfungsfluid aufgeprägten Schwingungen, sei dies unter einem pneumatischen Druck, der in der Steuerkammer 19 über eine pneumatische Verbindung 20 von einer Pneumatikeinheit 21 aufgebracht werden kann. Dabei ist in der aus Figur 1 ebenfalls ersichtlichen Weise die gesamte Pneumatikeinheit 21 so ausgebildet, dass sie nicht nur integriert im Lager, genauer im becherartigen Widerlageranschlussstück 4, integriert eingebaut werden kann, sondern überdies auch der Ausgleichsmembran 9 den erforderlichen Blähraum 10 freilässt, der mit einer Aussenbelüftung versehen ist.

Das in der Weise aufgebaute Lager ist in einem ringförmigen Gehäuse 22 eingespannt. Dabei ist in der Darstellung der Figur 1 der widerlagerseitige Rand 23 des Lagergehäuses 22 noch im vormontierten Zustand des Lagers abgebildet. Beim Abschluss des Zusammenbaus des Hydrolagers wird dieser widerlagerseitige Rand 23 des Gehäuses 22 dann nach radial innen unter einen Aussenflansch 24 gebördelt, der am Widerlageranschlussstück 4 ausgeformt ist.

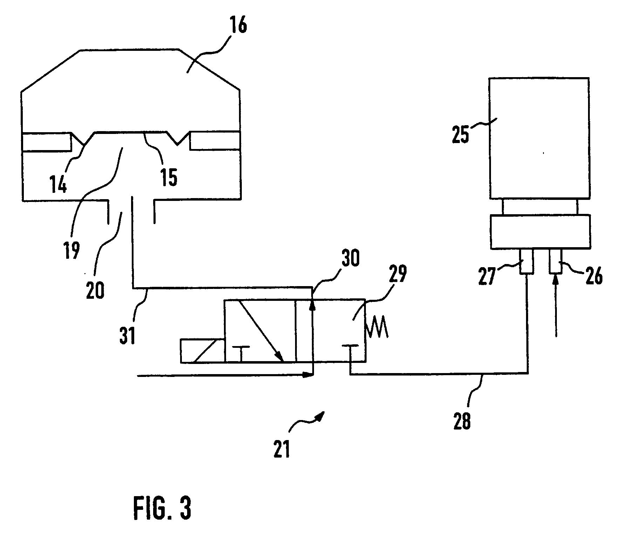

Die Pneumatikeinheit 21 ist in der Figur 3 im Blockschaltbild näher erläutert.

In der in Figur 3 gezeigten Weise besteht die Pneumatikeinheit 21 aus lediglich zwei Bauteilen, nämlich einem Kompressor 25 mit einem Ansaugstutzen 26 und einem Druckstutzen 27, der über eine Verbindung 28 mit einem 3/2-Wegeventil 29 verbunden ist. Ein Ausgangsstutzen 30 ist über eine Verbindung 31 mit dem Anschluss 20 der Steuerkammer 19 verbunden, die eine bewegliche Wand enthält, nämlich die über die Rollfalte 18 angebundene Lose 15. Der Steuerkammer 19 gegenüber ist die Entkopplungskammer 16 schematisch angedeutet, die im Zusammenhang mit dem Ausführungsbeispiel gemäß Figur 1 eingehend beschrieben ist.

Das 3/2-Wegeventil 29 ist so ausgelegt, dass es an seinem Ausgang 30 drei Schaltzustände realisieren kann, nämlich die Zustände BELÜFTET, GESCHLOSSEN und DRUCKBEAUFSCHLAGT. Dabei ist das 3/2-Wegeventil 29 in der Darstellung des schematischen Blockschaltbildes der Figur 3 in der Stellung BELÜFTET gezeigt.

Im Schaltzustand BELÜFTET ist der Ventilanschluss 30 frei mit dem atmosphärischen Umgebungsdruck verbunden. Das Ventil ist also offen, während der Kompressor 25 unwirksam geschaltet, zweckmäßigerweise ausgeschaltet ist. Die Steuerkammer 19 liegt also auf Umgebungsdruck, zumindest solange, wie die Lose 15 frei beweglich bleibt.

Im Schaltzustand GESCHLOSSEN bleibt die Pumpe nach wie vor unwirksam, ist jedoch gleichzeitig die Belüftung zur Umgebung gesperrt. Das Luftvolumen in der Steuerkammer 19 ist abgesperrt, so dass sich also mit dem Schwingen der Lose 15 in der Steuerkammer je nach Schwingphase ein geringer Überdruck bzw. ein geringer Unterdruck ausbilden, der die Beweglichkeit der Lose 15 steuernd beeinflusst und damit auch die Kenndaten des Hydrolagers insgesamt in Richtung einer mäßigen Versteifung des Lagers verschiebt.

Im Schaltzustand DRUCKBEAUFSCHLAGT schließlich ist der Kompressor 25 wirksam, also angeschaltet, und über die Leitung 28 mit dem 3/2-Wegeventil verbunden, und ist dieser Ventilanschluss auf den Ausgang 30 durchgeschaltet. Die Belüftung bleibt weiterhin gesperrt.

In diesem Schaltzustand liegt die Steuerkammer 19 pneumatisch also auf entweder dem Überdruck, der am Druckstutzen 27 des Kompressors 25 verfügbar ist, oder auf einem unter dieser Vorgabe über ein Ventil geregelten Offset-Druck. Dieser statische Offset-Druck liegt zum pneumatischen Schalten gebräuchlicher Aggregatlager für Personenkraftwagen im Bereich einiger hundert Millibar, vorzugsweise im Bereich um 500 Millibar. Unter diesen Bedingungen ist die Beweglichkeit der Entkopplungslose weiter behindert oder eingeschränkt, so dass das Hydrolager insgesamt gegenüber dem Schaltzustand GESCHLOSSEN noch einmal wesentlich versteift wird.

Mit einem einfachen Kompressor 25 und einem simplen 3/2-Wegeventil 29, mit deren Hilfe in einer winzigen Steuerkammer 19 auf eine Entkopplungslose 15 pneumatisch eingewirkt werden kann, können also durch einfaches Verstellen des Ventils wahlweise einer von jeweils drei verschiedenen pneumatischen Schaltzuständen eingestellt werden, die das Lager in die drei Betriebszustände weich, mittel und hart versetzen. Dabei können mit einer solchen Zustandseinstellung, die ohne nennenswerte Kosten auch für preiswerte Großserienfahrzeuge realisierbar ist, drei definierte Federungszustände eingestellt werden, die in der Praxis vom Fahrer als wesentlich angenehmer empfunden werden als teure, aufwendige und weniger effektive Ist-Zeit-Regelungen pneumatischer oder hydraulischer Art.

Das Umschalten von jeweils einem der drei in einen jeweils anderen der drei hier vorgesehenen Schaltzustände des Hydrolagers kann dabei prinzipiell entweder vom Armaturenbrett des Kraftfahrzeugs aus erfolgen, so dass sich der Fahrer das Fahrzeug auf ein Fahrverhalten und Fahrgefühl einstellen kann, das ihm als angemessen und angenehm erscheint, kann aber auch automatisch über die Bordelektronik erfolgen, die heute auch die einfachsten Fahrzeuge aufweisen, beispielsweise unter Verwendung der Motordrehzahl als Führungsgröße.

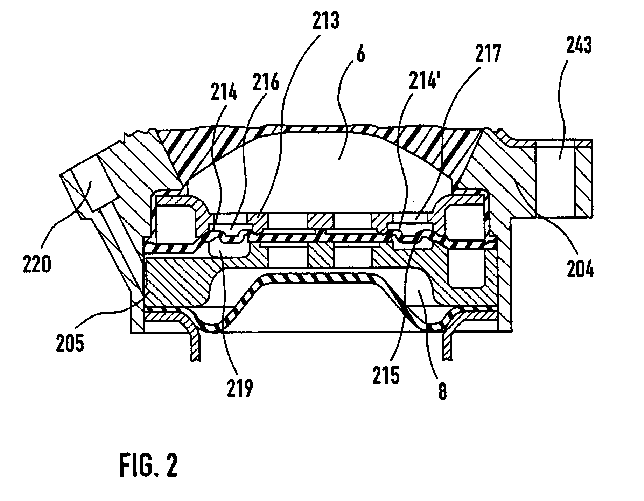

In der Figur 2 ist in Teildarstellung ein zweites Ausführungsbeispiel eines Hydrolagers mit den Merkmalen gemäß der Erfindung dargestellt. Abweichend von der in Figur 1 dargestellten konstruktiven Auslegung des Lagers ist in der Figur 2 die Lose 215 nicht als zentrale Scheibe, sondern als Ringscheibe in einem ebenfalls ringförmigen Losekäfig 216 ausgebildet. Dementsprechend ist die Lose auch nicht an einer ringförmig umlaufenden Rollfalte, sondern an einer radial innenliegenden Rollfalte 214' und einer radial außenliegenden Rollfalte 214 angelenkt. Auch ist die in Figur 1 napfartig zylindrische Steuerkammer 19 bei der Auslegung gemäß Figur 2 als ringförmige Steuerkammer 219 konfiguriert.

Die Pneumatikeinheit 21 ist nicht, wie in der Figur 1 dargestellt, im Hydrolager selbst integriert, sondern liegt in einer in Figur 2 nicht dargestellten Weise ausserhalb des inneren Bauraums des Hydrolagers, sei dies nun vollkommen getrennt vom Hydrolager oder außen an dieses angebaut. In prinzipiell gleicher Weise wie ausführlich im Zusammenhang mit dem Ausführungsbeispiel gemäß Figur 1 erläutert, ist jedoch auch bei dem in Figur 2 dargestellen Ausführungsbeispiel die Steuerkammer 219 über den Anschluss 220 in die drei oben beschriebenen pneumatischen Schaltzustände BELÜFTET, GESCHLOSSEN und DRUCKBEAUFSCHLAGT zu versetzen. Schließlich ist das in Figur 2 in seinen hier wesentlichen Elementen gezeigte Ausführungsbeispiel eines Hydrolagers mit den Merkmalen gemäß der Erfindung auch durch ein Widerlageranschlussstück 204 gekennzeichnet, das nicht über einen Gewindebolzen 43 (Figur 1) auf dem Widerlager befestigt ist, sondern über eine Flanschverbindung 243. Auf diese Weise ist die Trennscheibe 205 nicht auf, sondern unmittelbar in dem Widerlageranschlussstück 204 gehaltert.

Der Vorteil des in Figur 2 beschriebenen Ausführungsbeispiels des Hydrolagers gemäß der Erfindung liegt dabei in der axial extrem niedrigen Bauweise, mit der ein solches pneumatisch stellbares Hydrolager realisierbar ist.

## Patentansprüche

1. Elastisches Lager mit hydraulischer Dämpfung, insbesondere Aggregatlager, mit einer konisch ringförmigen Tragfeder, die ein Auflageranschlussstück trägt und mittelbar oder unmittelbar auf einem Widerlageranschlussstück abgestützt ist, mit einer Trennscheibe, zwischen der und der Tragfeder eine mit einem hydraulischen Dämpfungsfluid gefüllte hydraulische Arbeitskammer definiert ist, mit einem Drosselkanal, der die Arbeitskammer mit einer Ausgleichskammer verbindet, die der Arbeitskammer gegenüber zwischen der Trennscheibe und einer elastisch leicht verformbaren Ausgleichsmembran definiert ist, mit einer in einem Käfig senkrecht zur Trennscheibenebene beweglich gefangenen Lose zum Entkoppeln von Schwingungen mit kleinen Amplituden sowie mit einem umschliessenden Lagergehäuse, das die axiale Folge der Lagerteile fluiddicht und mechanisch fest miteinander verbindet, wobei die Lose (15; 215) scheibenförmig ausgebildet ist und an ihrer Peripherie über Rollfalten (14; 214,214') an der Trennscheibe (5) gehaltert ist und mit ihrer arbeitskammerseitigen Oberfläche mit dem Dämpfungsfluid kommuniziert, während sie mit ihrer gegenüberliegenden Oberfläche die bewegliche Wand einer sowohl von der Arbeitskammer (6) als auch von der Ausgleichskammer (8) hermetisch getrennten pneumatisch beaufschlagbaren Steuerkammer (19; 219) bildet,
**gekennzeichnet durch**
die Kombination eines Kompressors (25) mit einem 3/2-Wegeventil (29) zur Schaltung der Steuerkammer (19; 219) in jeweils einen der drei Zustände BELÜFTET, GESCHLOSSEN und DRUCKBEAUFSCHLAGT.

2. Lager nach Anspruch 1,
**gekennzeichnet durch**
einen Losekäfig (11, 13; 213), der die Rollfalte (14; 214, 214') der Lose (15; 215) an ihrer Peripherie geschlossen umlaufend druckfest und fluiddicht einspannt, und so mit der Lose eine Entkopplungskammer (16; 216) bildet, die nur über Durchbrüche (17; 217), die in der auflagerseitigen Wand des Losekäfigs ausgebildet sind, mit dem Dämpfungsfluid in der Arbeitskammer (6) kommuniziert.

3. Lager nach Anspruch 2,
**gekennzeichnet durch**
eine entkopplungskammerseitige Elastomeroberfläche der Lose (15; 215), die flächenkomplementär zur entkopplungskammerseitigen Oberfläche des Käfigs (13; 213) so konfiguriert ist, dass die Lose im Schaltzustand DRUCKBEAUFSCHLAGT an der Käfigwand immobilisiert anliegt und die Entkopplungskammer (16; 216) druckfest und fluiddicht gegenüber der Arbeitskammer verschlossen ist.

4. Lager nach einem der Ansprüche 1 bis 3,
**gekennzeichnet durch**
eine becherartige Konfiguration des Widerlageranschlussstücks (4) nach Art eines Gehäusebodens, in das der Kompressor (25) und das 3/2-Wegeventil (29) integriert sind.

## Claims

1. An elastic bearing with hydraulic damping properties, particularly a unit bearing, comprising a conical annular spring holding a connecting support member and directly or indirectly braced against a connecting abutment member; a separating disc and a hydraulic working chamber defined between the disc and the spring and filled with a hydraulic damping fluid; a throttle duct connecting the working chamber to a compensating chamber opposite the working chamber and defined between the separating disc and an elastically easily deformable compensating diaphragm; a clearance member held captive in a cage and movable at right angles to the plane of the separating disc in order to decouple low-amplitude vibrations and enclosed by a bearing casing which firmly connects the axial sequence of bearing parts together mechanically and in fluid-tight manner, wherein the clearance member (15; 215) is disc-shaped and held by corrugations (14; 214, 214') at its periphery against the separating disc (5) and communicating with the damping fluid via its surface adjoining the working chamber, whereas the opposite side of the clearance member constitutes the movable wall of a pneumatically actuatable control chamber (19; 219) hermetically separated both from the working chamber (6) and from the compensating chamber (8), **characterised by** a compressor (25) in combination with a 3/2-way valve (29) for switching the control chamber (19; 219) into one of the following three states: AERATED, CLOSED and PRESSURISED.

2. A bearing according to claim 1, **characterised by** a clearance cage (11, 13; 213) which encloses and surrounds the corrugation of the periphery of the clearance member (15; 25) and clamps it in pressure-tight and fluid-tight manner peripherally and thus in co-operation with the clearance member forms a decoupling chamber (16; 216) which communicates with the damping fluid in the working chamber (6) only via apertures (17; 217) formed in the wall of the cage adjacent the support member.

3. A bearing according to claim 2, **characterised by** an elastomer surface of the clearance member (15; 215) adjacent the decoupling chamber and complementary in surface with the cage (13; 213) adjacent the decoupling chamber and so shaped that the clearance member, when switched to PRESSURISED, is immobilised and abuts the cage wall and the decoupling chamber (16; 216) is sealed in pressure-tight and fluid-tight manner from the working chamber.

4. A bearing according to any of claims 1 to 3, **characterised in that** the connecting abutment member (4) is cup-shaped like the bottom of a casing and incorporates the compressor (25) and the 3/2-way valve (29).

## Revendications

1. Palier élastique à amortissement hydraulique, en particulier palier pour groupe, avec un ressort support en forme d'anneau conique, portant une pièce de raccordement de pose et prenant appui, indirectement ou directement, sur une pièce de raccordement de contre-appui, avec un disque séparateur, entre lequel et le ressort support, est définie une chambre de travail hydraulique remplie d'un fluide d'amortissement hydraulique, avec un canal d'étranglement reliant la chambre de travail à une chambre de compensation, qui est définie à l'opposé de la chambre de travail, entre le disque de séparation et une membrane de compensation facilement déformable élastiquement, avec un élément mécaniquement lâche, emprisonné avec mobilité dans une cage, perpendiculairement au plan de disque de séparation, afin de désaccoupler les vibrations à petites amplitudes, ainsi qu'avec un boîtier de palier les enfermant, qui relie ensemble, de façon étanche aux fluides et mécaniquement rigidement, la succession axiale des pièces de palier, l'élément mécaniquement lâche (15; 215) étant réalisé en forme de disque et étant maintenu, sur sa périphérie, par des plis de roulage (14; 214; 214') sur le disque de séparation (5) et communiquant, par sa face située du côté de la chambre de travail, avec le fluide d'amortissement, tandis qu'il forme, par sa surface opposée, la paroi mobile d'une chambre de commande (19; 219) susceptible d'être sollicitée pneumatiquement, séparée hermétiquement, tant vis-à-vis de la chambre de travail (6), qu'également de la chambre de compensation (8), **caractérisé par** la combinaison d'un compresseur (25) avec une soupape multivoies (29) à 3 passages/2 positions pour la commutation de la chambre de commande (19; 219), chaque fois en l'un des trois états AÉRÉ, FERMÉ et SOLLICITÉ PAR UNE PRESSION.

2. Palier selon la revendication 1, **caractérisé par** une cage à élément mécaniquement lâche (11, 13; 213) enserrant, de façon résistant à la pression et étanche aux fluides, en l'entourant en le fermant sur sa périphérie, le pli de roulage (14; 214, 214') de l'élément mécaniquement lâche (15; 215) sur sa périphérie, et formant ainsi, avec l'élément mécaniquement lâche, une chambre de désaccouplement (16; 216), qui communique avec le fluide d'amortissement présent dans la chambre de travail (6), uniquement par des passages (17; 217) réalisés dans la paroi située côté reposoir de la cage à élément mécaniquement lâche.

3. Palier selon la revendication 1, **caractérisé par** une surface d'élastomère, située du côté de la chambre de désaccouplement, de l'élément mécaniquement lâche (15; 215), la surface, située du côté de la chambre de désaccouplement, de la cage (13; 213) est configurée de manière que, lorsqu'il est à l'état de commutation SOLLICITÉ SOUS PRESSION, l'élément mécaniquement lâche appuie avec immobilisation sur la paroi de cage, et que la chambre de désaccouplement (16; 216) soit fermée, de façon résistante à la pression et étanche aux fluides, par rapport à la chambre de travail.

4. Palier selon l'une des revendications 1 à 3, **caractérisé par** une configuration du genre en godet, à la façon d'un fond de boîtier de la pièce de raccordement de contre-appui (4), dans laquelle le compresseur (25) et la soupape multivoies à 3 passages/2 positions (29) sont intégrés.
